**Europäisches Patentamt**

**European Patent Office**

**Office européen des brevets**

(11) Veröffentlichungsnummer : **0 385 940 B1**

(12) **EUROPÄISCHE PATENTSCHRIFT**

(45) Veröffentlichungstag der Patentschrift :
**02.12.92 Patentblatt 92/49**

(21) Anmeldenummer : **90810125.6**

(22) Anmeldetag : **21.02.90**

(51) Int. Cl.⁵ : **B01D 35/28,** B01D 39/08,
B01D 39/10, A61D 11/00

(54) **Vorrichtung zum Entschlammen von Bädern.**

(30) Priorität : **02.03.89 CH 774/89**

(43) Veröffentlichungstag der Anmeldung :
**05.09.90 Patentblatt 90/36**

(45) Bekanntmachung des Hinweises auf die
Patenterteilung :
**02.12.92 Patentblatt 92/49**

(84) Benannte Vertragsstaaten :
**CH DE FR GB IT LI**

(56) Entgegenhaltungen :
**EP-A- 0 002 237**
**GB-A- 2 050 855**
**GB-A- 2 088 230**
**US-A- 2 450 006**

(73) Patentinhaber : **CIBA-GEIGY AG**
**Klybeckstrasse 141**
**CH-4002 Basel (CH)**

(72) Erfinder : **Leuenberger, Andreas**
**Schulgasse 7**
**CH-4105 Biel-Benken (CH)**

**Beschreibung**

Die Erfindung betrifft eine Vorrichtung zum Entschlammen von Bädern, insbesondere zum Befreien von Zeckentauchbädern für Kühe von von den Tieren eingebrachten Feststoffteilchen, mit einem in die Flüssigkeit eines Bades eintauchbaren Ansaugrohr, einer Pumpe und einem von dieser gespeisten Vorlaufbecken, das mit einem Überlauf versehen ist, der die zu reinigende Flüssigkeit eines Bades zum oberen Rand einer schräg zur Schwerkraftrichtung angeordneten, die Feststoffteilchen zurückhaltenden Siebplatte leitet, die mit einer Vielzahl von sich im wesentlichen quer zur Strömungsrichtung erstreckenden Schlitzen versehen ist, wobei unter der Siebplatte ein Auffangbecken für die gefilterte Flüssigkeit vorgesehen ist, das über einen Ablauf mit dem zu reinigenden Bad in Verbindung steht.

Eine derartige Vorrichtung mit einem metallischen Schrägsieb zum Abtrennen von Feststoffen aus wässrigen Flüssigkeiten ist bereits für verschiedene Einsatzgebiete, insbesondere zur Vorklärung von Kommunalabwasser, zur Feinabscheidung von Schlachthofabwasser, zur Faserabscheidung in Textilfabriken und Faserabtrennung in Papierfabriken, verwendet worden.

In tropischen Ländern ist es erforderlich, Haustiere, insbesondere Kühe regelmäßig von Krankheitserregern zu befreien, um das Ausbreiten von Seuchen zu verhindern. In Ostafrika werden Kühe in Zeckenbädern, die ein Insektizid enthalten, zweimal wöchentlich durch ein derartiges Bad getrieben, wobei sie jedoch das Bad durch an Körperteilen haftenden Schmutz sowie durch körpereigene Exkremente verunreinigen. Insbesondere wird das in den Klauen der Kühe abgesetzte Bodenmaterial in das Bad verschleppt und setzt sich dort am Boden als Schlamm ab.

Die Tauchbäder für Kühe enthalten etwa 20.000 Liter Wasser und etwa 0,2 % Insektizide. Wenn etwa 50.000 bis 100.000 Kühe Sand, Steine, Erde und sonstige Fremdstoffe in das Tauchbad angeschleppt haben, ist es erforderlich, dieses zu reinigen. Aus diesem Grunde wurden derartige Tauchbäder bisher ein- bis zweimal pro Jahr komplett entleert, um den Bodenschlamm aus dem Becken zu entfernen. Bei etwa 10 % Schlammanteil sind auf diese Weise 2.000 Liter Schlamm zu beseitigen. Im Hinblick auf die großen Schlamm- und Wassermengen ist die bisherige Vorgehensweise umständlich, da sie hohe Wasserverluste sowie Zeitverluste mit sich bringt, da während des Entleerens und erneuten Auffüllens des Tauchbades keine Bäder zum Schützen der Tiere vor Krankheiten möglich sind.

Ausgehend von diesem Stand der Technik liegt der Erfindung die Aufgabe zugrunde eine Vorrichtung zu schaffen, die es gestattet, in möglichst kurzer Zeit und ohne Betriebsunterbrechung ein verschlammtes Bad auch von Feststoffteilchen kleiner Größe zu befreien.

Weiterhin ist aus der US-A-2,450,006 eine Vorrichtung zur Reduktion des Wassergehalts in einem Gemisch aus Wasser und Fasern bekannt, ein sogenannter "Thickener". Dieser "Thickener" umfasst einen oberhalb eines Siebs angeordneten Vorratsbehälter, aus dem das Gemisch über das konvex geformte Sieb hinweg in eine Auffangrinne oder ein Auffangbecken strömt. Dabei kann zumindest ein Teil des in dem Gemisch enthaltenen Wassers beim Strömen über das Sieb hinweg durch die Maschen des Siebs hindurch zu einem Wasserabfluss gelangen und abgeführt werden, so dass der Wassergehalt des im Auffangbecken ankommenden Gemischs reduziert ist.

Diese Aufgabe wird erfindungsgemäß dadurch gelöst, daß die Siebplatte einer Vorrichtung der eingangs genannten Art als Stützgerippe für ein aufgelegtes Filtertuch aus einem engmaschigen Kunststoffgewebe ausgebildet ist und eine Vielzahl von Siebstäben aufweist, wobei die von diesen Siebstäben gebildeten Schlitze eine minimale Weite aufweisen, die ein Mehrfaches der Maschenweite des Filtergewebes des Filtertuchs beträgt.

Bei bekannten Siebplatten wird aus der parallel über die Siebplatte schnell abwärts strömenden Suspension jeweils die unterste Wasserschicht mit Hilfe des Coanda-Effektes durch deren Siebschlitze nach innen zum Auffangbecken umgeleitet. Die Trennung der Feststoffe erfolgt dabei dadurch, daß die Feststoffe der raschen Umlenkbewegung der Flüssigkeit wegen ihrer Massenträgheit nicht folgen, so daß sie sich auf der Siebplattenoberfläche ansammeln, wo sie weiter entwässert werden und schließlich am unteren Rand der Siebplatte über deren Abwurfkante in einen Feststoffbehälter fallen. Die sich ergebenden Strömungsverhältnisse können jedoch einen gewissen Stau nicht verhindern, so daß die Strömungsgeschwindigkeit der gereinigten Flüssigkeit begrenzt ist. Durch das aufgelegte Filtertuch aus einem engmaschigen Kunststoffgewebe, das aufgrund seines Eigengewichtes und der zulaufenden Flüssigkeit gegen die Oberseite der Siebplatte angedrückt wird, ergibt sich jedoch ein zusätzlicher Kapillareffekt und eine in günstiger Weise veränderte Strömung der flüssigen und festen Teilchen. Auf diese Weise wird durch Auflegen des Filtertuches aus einem engmaschigen Kunststoffgewebe ein erhöhter Flüssigkeitsdurchsatz erreicht, selbst wenn die abzuscheidenden Feststoffe eine bestimmte minimale Größe haben.

Das auf die schräg zur Schwerkraft verlaufende Siebplatte aufgelegte Filtertuch ist vorzugsweise ein Polyester-Monofilament-Filtergewebe, dessen Maschenweite kleiner ist als die Schlitzbreite an der engsten Stelle der Schlitze zwischen den Siebstäben der Siebplatte, die vorzugsweise ein dreieckförmiges Profil aufweisen, so daß die Schlitze sich in Richtung auf das Auffangsbecken verbreitern, weshalb die Strömungsgeschwindigkeit im Bereich der Maschen des Filtertuches am höchsten ist. Es hat sich herausgestellt, daß durch den auf diese Weise erzeugten Synergieeffekt gleichzeitig ein hoher Strömungsmengendurchsatz als auch ein Ausscheiden verhältnismäßig kleiner Partikel möglich sind.

Bei einem bevorzugten Ausführungsbeispiel weist das Filtergewebe eine Maschenöffnung von etwa 177 Mikrometer und die Siebplatte eine Schlitzweite von etwa 500 Mikrometer auf. Je nach den Eigenschaften des Bodens, auf dem die Kühe leben, kann die Maschenöffnung des Filtergewebes zwischen 100 und 250 Mikrometer betragen. Die Schlitzweite der Siebplatte, die gegenüber der Vertikalen mit einer Neigung von 20 bis 50 Grad angeordnet ist, kann zwischen 250 und 1.500 Mikrometer liegen. Versuche haben gezeigt, daß weder die Siebplatte alleine noch das Filtergewebe alleine die vorteilhafte Kombinationswirkung der Siebplatte mit dem aufgelegten Filtergewebe haben.

Nachfolgend wird ein Ausführungsbeispiel der Erfindung anhand der Zeichnung näher erläutert. Es zeigen:

Fig. 1 den Abscheidungsteil der Vorrichtung zum Entschlammen von Bädern in einer perspektivischen Ansicht,

Fig. 2 einen Ausschnitt aus einem Querschnitt durch die Siebplatte der Vorrichtung entlang der Linie II-II in Fig. 1 und

Fig. 3 eine schematische Darstellung der Vorrichtung im Querschnitt.

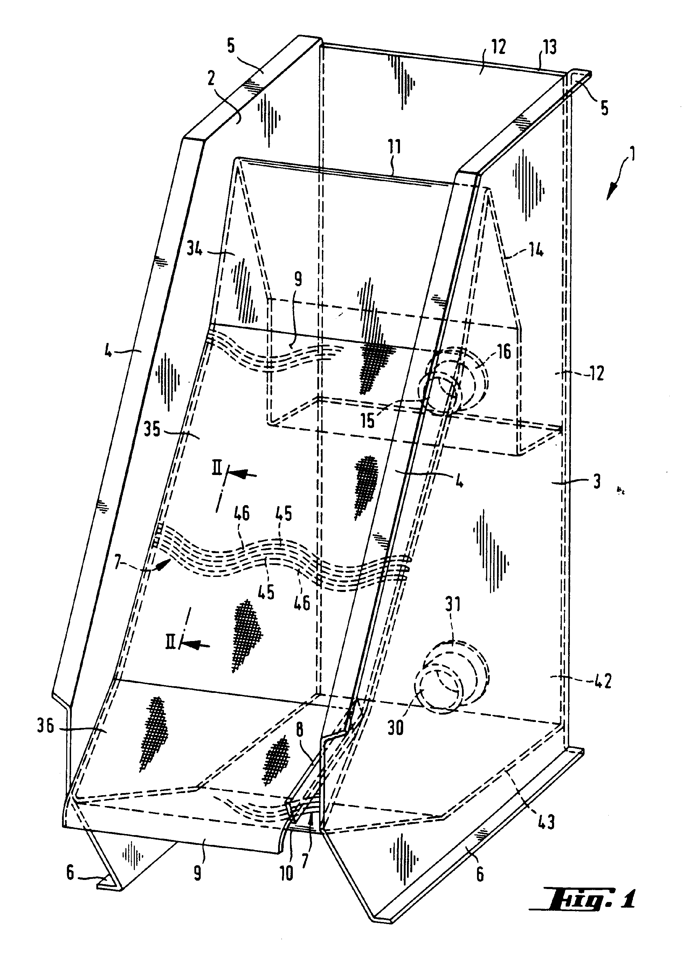

Fig. 1 zeigt einen Abscheidungsteil 1, der im wesentlichen aus Edelstahlblech hergestellt ist und über eine linke Seitenwand 2 und eine rechte Seitenwand 3 verfügt. Zur Versteifung der Seitenwände sind Abkantungen 4, 5 und 6 vorgesehen, wobei die Abkantungen 6 zusätzlich zur Befestigung des Abscheidungsteils auf einem Anhänger dienen, der ebenso wie das Fahrzeug zum Schleppen dieses Anhängers in der Zeichnung nicht dargestellt ist. Der Transportanhänger gestattet es, den Abscheidungsteil 1 sowie die zusätzlich benötigten Materialien schnell und einfach zum jeweiligen Einsatzort zu bringen.

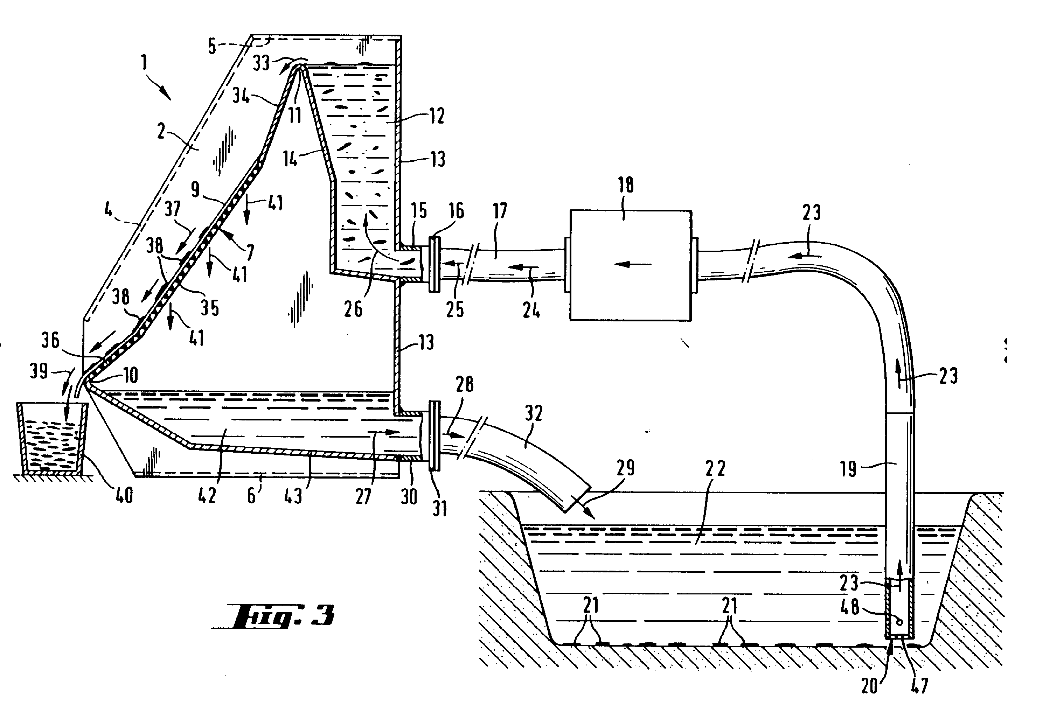

Zwischen der linken Seitenwand 2 und der rechten Seitenwand 3 erstreckt sich eine Siebplatte 7, die in Fig. 1 bis auf den kleinen rechts neben einem Abweiser 8 liegenden Teil von einem Filtertuch 9 überdeckt ist, das über den unteren Rand 10 der Siebplatte 7 herunterhängt. Der obere Rand 11 der Siebplatte 7 oder einer Verlängerungsplatte der Siebplatte 7 bildet einen Überlauf für ein Vorlaufbecken 12, das in Fig. 3 im Schnitt zu erkennen ist. Das Vorlaufbecken 12 erstreckt sich einerseits zwischen der linken Seitenwand 2 und der rechten Seitenwand 3 und andererseits zwischen einer Rückwand 13 und einer Trennwand 14 des Abscheidungsteils 1 der Vorrichtung zum Entschlammen von Bädern.

Das Vorlaufbecken 12 verfügt über einen Zulauf 15 mit einem Flanschanschluß 16, der eine Verbindung mit einem flexiblen PVC-Schlauch 17 von beispielsweise 8 Zentimeter Durchmesser gestattet. Der PVC-Schlauch 17 ist mit dem Ausgang einer Pumpe 18, insbesondere einer von einem Dieselmotor angetriebenen Zentrifugalpumpe verbunden, die einen Durchsatz von 800 Liter pro Minute ermöglicht. Die Pumpe 18 ist zusammen mit dem Abscheidungsteil 1 auf dem in der Zeichnung nicht dargestellten Anhänger über schwingungsdämpfende Gummipuffer befestigt.

Am Saugeingang der Pumpe 18 ist ein Ansaugrohr 19 mit einem Durchmesser von 8 Zentimeter angeschlossen, dessen Ansaugöffnung 20 mit einem Gitter 47 abgedeckt ist, um das Eindringen von Steinen mit einem Durchmesser von mehr als 4 Zentimeter zu verhindern. Etwa 5 bis 10 Zentimeter von der Ansaugöffnung 20 entfernt sind im Ansaugrohr 19 etwa 6 Löcher 48 mit einem Durchmesser von 2 bis 3 Zentimeter vorgesehen, die verhindern, daß beim Eintauchen der Ansaugöffnung 20 in Schlammteile 21 ein Verstopfen des Ansaugrohres 19 auftritt.

Das Ansaugrohr 19 ist mit seiner Ansaugöffnung 20 bis in die Nähe des Bodens eines Tauchbades 22 abgesenkt, in das die Kühe zum Desinfizieren hineinspringen und das über eine nicht gezeichnete Treppe von den Tieren verlassen werden kann. Der Inhalt des Tauchbades 22 beträgt beispielsweise 20.000 Liter. Die Wassertiefe ist so gewählt, daß ein Verletzen der Tiere ausgeschlossen und ein vollständiges Baden gewährleistet ist. Die Abmessungen sind so gewählt, daß die Tiere eine ausreichende Verweilzeit haben, bevor sie die Treppe zum Verlassen des Tauchbades 22 erreichen.

Das aus dem Tauchbad mit Hilfe der Pumpe 18 abgesaugte verschlammte Wasser gelangt in Richtung der Pfeile 23, 24, 25 und 26 in das Vorlaufbecken 12 des Abscheidungsteils 1. Die gefilterte Flüssigkeit verläßt den Abscheidungsteil 1 in Richtung der Pfeile 27, 28 und 29. Entsprechend dem Zulauf 15 verfügt der Abscheidungsteil 1 über einen Ablauf 30 mit einem Flanschanschluß 31, an den ein Kunststoffrohr 32 mit einem Durchmesser von beispielsweise 30 Zentimeter anschließbar ist, durch das die gefilterte Flüssigkeit zum Tauchbad 22 infolge der Schwerkraft zurückfließt.

Durch die Kreislaufführung ergibt sich eine erhebliche Wassereinsparung und durch die spezielle Ausgestaltung des Abscheidungsteils 1 ein hoher spezifischer Durchsatz. Das Vorlaufbecken 12 weist am oberen Rand 11 der Siebplatte 7 und der Trennwand 14 einen Überlauf auf, über den die verschmutzte Flüssigkeit in Richtung des Pfeils 33 überläuft. Der obere Teil 34 der Siebplatte 7 kann eine größere Steilheit aufweisen als der mittlere Teil 35 und der untere Teil 36 der Siebplatte 7, der wie der obere Teil 34 undurchlässig ausgebildet sein kann. Die verschmutzte Flüssigkeit gleitet entlang dem Pfeil 37 auf dem mittleren Teil 35, der mit dem Filtertuch 9 abgedeckten Siebplatte 7 herunter, wobei sich die Feststoffe anreichern und mit kleinen Anhäufungen 38 entlang der Oberfläche des Filtertuches 9 herunterrutschen, bis sie an der durch den Pfeil 39 veranschaulichten Stelle in einen Auffangbehälter 40 für Feststoffe fallen.

Die von den Feststoffen getrennte Flüssigkeit fällt in Richtung der Pfeile 41 in ein Auffangbecken 42, das eine Bodenplatte 43 aufweist, die sich zwischen den Seitenwänden 2 und 3 erstreckt. Das Auffangbecken 42 wird über den Ablauf 30 entleert.

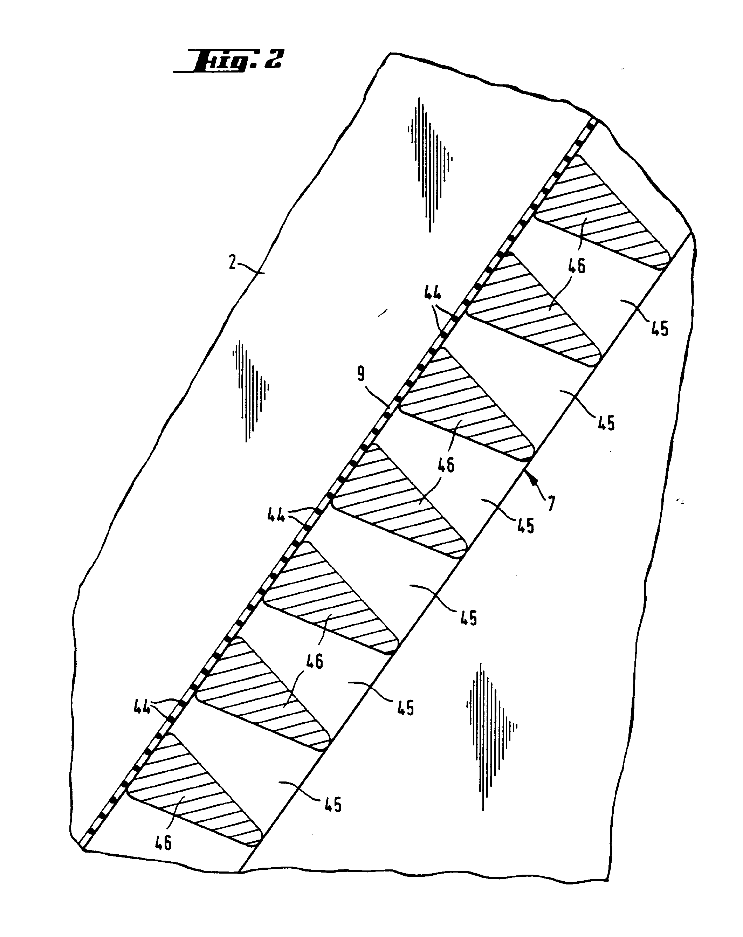

Fig. 2 zeigt stark vergrößert einen Ausschnitt aus der Siebplatte 7 und dem aufgelegten Filtertuch 9 im Querschnitt. In Fig. 2 erkennt man deutlich, wie die Siebplatte 7 als Stützgerippe für das Filtertuch 9 dient, dessen Fäden 44 im Schnitt als eine Vielzahl von Punkten dargestellt sind. Die einzelnen Fäden 44 des Filtertuches 9 bilden enge Maschen, die beispielsweise eine Maschenöffnung zwischen 100 bis 250 Mikrometer und vorzugsweise 177 Mikrometer haben. Das Filtertuch 9 ist vorzugsweise ein Polyester-Monofilament-Filtergewebe, das sich nicht wie Naturfasergewebe vollsaugt, die nicht verwendbar sind.

Der Fadendurchmesser der in Fig. 2 durch Punkte im Querschnitt dargestellten Gewebefäden 44 beträgt 60 bis 200 Mikrometer. Die Fadenzahl pro Quadratzentimeter liegt zwischen 25 und 60. Die freie Fläche des Gewebes des Filtertuches 9 liegt zwischen 15 und 40 %. Je nach dem verwendeten Gewebe beträgt dessen Gewebedicke 100 bis 300 Mikrometer. Dabei haben die Polyester-Monofilament-Filtergewebe Flächengewichte von 60 bis 200 Gramm pro Quadratmeter. Die Auswahl des jeweiligen Gewebes für das Filtertuch 9 hängt von den Schlammeigenschaften sowie von dem erforderlichen Mindestdurchsatz ab.

Bei einer Maschenöffnung von 177 Mikrometer ist es zweckmäßig, wenn die Schlitzweite der Schlitze 45 zwischen den Siebstäben 46 der Siebplatte 7 an der engsten Stelle etwa 500 Mikrometer beträgt. In Fig. 2 erkennt man deutlich das dreieckförmige Profil der Siebstäbe 46, die vorzugsweise aus einem rostfreien Stahl bestehen. Die Schlitze 45 erstrecken sich horizontal sinusförmig gewellt zwischen den Seitenwänden 2 und 3, die im Abstand von etwa 60 Zentimeter angeordnet sind. Die Länge des mit Siebstäben 46 belegten Bereichs zwischen den Seitenwänden 2 und 3 beträgt beispielsweise 1,2 Meter. Zweckmäßig sind Neigungen der Siebplatte 7, die zwischen 20 und 50 Grad in Bezug auf die Vertikale liegen.

Die Fixierung des Filtertuches 9 kann in der Nähe des oberen Randes 11 der Siebplatte oder der Trennwand 14 erfolgen. Die Kombination des Filtertuches 9 und der Siebplatte 7 ist selbstreinigend, was die Handhabung des Abscheidungsteils 1 sehr vereinfacht.

## Patentansprüche

1. Vorrichtung zum Entschlammen von Bädern, insbesondere zum Befreien von Zeckentauchbädern (22) für Kühe von von den Tieren eingebrachten Feststoffteilchen (21), mit einem in die Flüssigheit eines Bades eintauchbaren Ansaugrohr (19), einer Pumpe (18) und einem von dieser gespeisten Vorlaufbecken (12), das mit einem Überlauf versehen ist, der zie zu reinigende Flüssigkeit zum oberen Rand (11) einer schräg zur Schwerhraftriehtung angeordneten, die Feststoffteilchen zurückhaltenden Siebplatte (7) leitet, die mit einer Vielzahl von sich im wesentlichen quer zur Strömungsrichtung (37) erstreckenden Schlitzen (45) versehen ist, wobei unter der Siebplatte (7) ein Auffangbecken (42) für die gefilterte Flüssigkeit vorgesehen ist, das über einen Ablauf (30) mit dem Bad (22) in Verbindung steht, dadurch gekennzeichnet, dass die Siebplatte (7) als Stützgerippe für ein aufgelegtes Filtertuch (9) aus einem engmaschigen Kunststoffgewebe ausgebildet ist und und eine Vielzahl von Siebstäben (46) aufweist, wobei die von diesen Siebstäben (9) gebildeten Schlitze (45) eine minimale Weite aufsweisen, die ein Mehrfaches der Maschenweite des Filtergewebes des Filtertuchs (9) beträgt.

2. Vorrichtung nach Anspruch 1, dadurch gekennzeichnet, dass das auf die sich schräg zur Schwerkraftrichtung erstreckende Siebplatte (7) aufgelegte Filtertuch (9) ein Polyester-Monofilament-Filtergewebe ist.

3. Vorrichtung nach einem der vorstehenden Ansprüche, dadurch gekennzeichnet, dass die Siebstäbe (9) ein im wesentlichen dreieckförmiges Profil aufweisen, wobei sich die von den Siebstäben (9) gebildeten Schlitze (45) ausgehend von der Beschickungsseite der Siebplatte (7) vergrössern.

4. Vorrichtung nach einem der vorstehenden Ansprüche, dadurch gekennzeichnet, dass die Weite der Schlitze (45) der Siebplatte (7) 250 Mikrometer bis 1500 Mikrometer und die Maschenöffnung des Filtergewebes des Filtertuchs (9) 100 Mikrometer bis 250 Mikrometer beträgt.

5. Vorrichtung nach Anspruch 4, dadurch gekennzeichnet, dass das Filtergewebe eine Maschenöffnung von etwa 177 Mikrometer und die Siebplatte (7) eine Schlitzweite von etwa 500 Mikrometer aufweist.

**6.** Vorrichtung nach einem der vorstehenden Ansprüche, dadurch gekennzeichnet, dass der Neigungswinkel der Siebplatte (7) mit dem aufgelegten Filtertuch (9) gegenüber der Vertikalen zwischen 20 und 50 Grad beträgt.

## Claims

**1.** An apparatus for the desludging of baths, in particular for the freeing of tick immersion baths (22) for cows from solid particles (21) introduced by the animals, comprising a suction tube (19) immersible in the liquid of a bath, a pump (10) and a preliminary basin (12) supplied by said pump, said basin being equipped with an overflow conducting the liquid to be purified to the upper edge (11) of a sieve plate (7) extending obliquely relative to the direction of gravity and retaining the solid particles, said plate being provided with a plurality of slots (45) extending essentially transversely to the direction of flow (37), wherein a collector basin (42) for receiving the filtered liquid is located under the sieve plate (7) and is connected by means of a drain (3) with the bath (22), wherein the sieve plate (7) is designed in the form of a ribbed support for a filter cloth (9) of a tight mesh plastics fabric placed upon it and has a plurality of sieve rods (46), the slots (45) formed by those sieve rods (9) having a minimum width that is a multiple of the mesh width of the filter fabric of the filter cloth (9).

**2.** An apparatus according to claim 1, wherein the filter cloth (9) placed onto the sieve plate (7), which extends obliquely relative to the direction of gravity, is a polyester monofilament filter fabric.

**3.** An apparatus according to either one of the preceding claims, wherein the sieve rods (9) have an essentially triangular profile, the slots (45) formed by the sieve rods (9) becoming wider starting from the charging side of the sieve plate (7).

**4.** An apparatus according to any one of the preceding claims, wherein the width of the slots (45) of the sieve plate (7) is from 250 to 1,500 micrometers and the mesh opening of the filter fabric of the filter cloth (9) is from 100 to 250 micrometers.

**5.** An apparatus according to claim 4, wherein the filter fabric has a mesh opening of approximately 177 micrometers and the sieve plate (7) has a slot width of approximately 500 micrometers.

**6.** An apparatus according to any one of the preceding claims, wherein the angle of inclination of the sieve plate (7) with the filter cloth (9) located on it is 20° to 50° relative to the vertical.

## Revendications

**1.** Dispositif pour extraire les boues des bains, en particulier pour débarrasser des particules solides (21) apportées par les animaux, des bains (22) d'immersion de vaches pour lutter contre les tiques, dispositif comportant un tube d'aspiration (19), qui peut plonger dans le liquide d'un bain ; une pompe (18) et un bassin amont (12), qui est alimenté par cette pompe et comporte un déversoir, qui conduit le liquide à épurer jusqu'au bord supérieur (11) d'une tôle de criblage (7), qui est disposée obliquement par rapport à la direction de la pesanteur, qui retient les particules solides et qui présente un grand nombre de fentes (45) s'étendant sensiblement transversalement par rapport à la direction d'écoulement (37), dispositif dans lequel, sous la tôle de criblage (7), est prévu, pour le liquide filtré, un bassin de collecte (42), qui est relié au bain (22) par l'intermédiaire d'une ouverture de sortie (30), dispositif caractérisé par le fait que la tôle de criblage (7) est conçue en tant que structure de support pour une toile filtrante (9), en un tissu en matière plastique à maille étroite, qui y est posée, et la tôle présente un grand nombre de barreaux de criblage (46), les fentes (45) formées par ces barreaux de criblage (9) présentant une ouverture minimale égale à un multiple de l'ouverture de maille du tissu de la toile filtrante (9).

**2.** Dispositif selon la revendication 1, caractérisé par le fait que la toile filtrante (9) posée sur la tôle de criblage (7), qui s'étend obliquement par rapport à la direction de la pesanteur, est un tissu filtrant de monofilaments de polyester.

**3.** Dispositif selon l'une des revendications précédentes, caractérisé par le fait que les barreaux de criblage (9) présentent un profil de forme sensiblement triangulaire, les fentes (45) formées par les barreaux de criblage (9) allant en s'agrandissant à partir du côté alimentation de la tôle de criblage (7).

**4.** Dispositif selon l'une des revendications précédentes, caractérisé par le fait que l'ouverture des fentes (45) de la tôle de criblage (7) vaut de 250 micromètres à 1 500 micromètres, et que l'ouverture de maille du tissu de la toile filtrante (9) vaut de 100 micromètres à 250 micromètres.

**5.** Dispositif selon la revendication 4, caractérisé par le fait que le tissu filtrant présente une ouverture de maille d'environ 177 micromètres, et que la tôle de criblage (7) présente une ouverture de fente d'environ 500 micromètres.

6. Dispositif selon l'une des revendications précédentes, caractérisé par le fait que l'angle d'inclinaison de la tôle de criblage (7), avec la toile filtrante (9) qui y est posée, vaut, par rapport à la verticale, entre 20 et 50 degrés.

*Fig. 1*

# Fig. 2

**Fig. 3**